# EUROPEAN PATENT APPLICATION

(11) **EP 4 847 992 A1**
(43) Date of publication of application: **02.12.2026**
(21) Application number: 25425022.8
(22) Date of filing: 29.05.2025
(51) Int. Cl.: G02F 1/21, G02B 6/12

(54) **OPTICAL WAVEGUIDE NOTCH FILTER ARRANGEMENT WITH HIGH REJECTION VALUES**

(71) Applicant: Scuola Superiore Sant'Anna, 56127 Pisa (IT)
(72) Inventor: PORZI, Claudio, I-56124 Pisa (IT); BOGONI, Antonella, I-56127 Pisa (IT)
(74) Representative: Rimini, Rebecca

(57) **Abstract**

A band-rejection optical waveguide filter arrangement is disclosed, including:
- an optical beam coupling/separation arrangement comprising:
a first port adapted to receive an optical signal input to the filter;
a second port adapted to output a filtered optical signal;
a third port connected directly to the first port and optically coupled to a first Fabry-Pérot cavity formed in an optical waveguide, resonating at a controlled first wavelength; and
a fourth port connected directly to the first port and optically coupled to a second Fabry-Pérot cavity formed in an optical waveguide, resonating at a second controlled wavelength,
in which each Fabry-Pérot cavity comprises a respective optical phase shifter, configured to tune its resonance frequency and determine a frequential separation between the resonance frequency of the first Fabry-Pérot cavity and the resonance frequency of the second Fabry-Pérot cavity such that a maximum relative phase shift between the optical signal reflected from the first Fabry-Pérot cavity and the optical signal reflected from the second Fabry-Pérot cavity is built at a rejection frequency of the optical filter arrangement, whereby the reflected optical signal from the first Fabry-Pérot cavity and the reflected optical signal from the second Fabry-Pérot cavity are in a condition of destructive interference.

## Description

The present invention relates to the processing of optical signals, and more specifically to a band-rejecting waveguide optical filter arrangement and circuits comprising such an optical filter arrangement.

The use of band-rejecting optical filters (also known as 'notch' filters) has applications in the fields of optical communications, laser-based sensing, and radio frequency (RF) signal processing based on photonics (also known as 'microwave photonics').

A band-rejecting optical filter is characterised by its ability to introduce high attenuation in a specific spectral region while signals outside it undergo ideally negligible attenuation. The range of optical frequencies over which a predetermined level of rejection is ensured defines the bandwidth of the filter, and typically the range of frequencies at the extremes of which the transmissivity of the filter is reduced by a factor of 2 from its maximum is used as a reference, labelled 'full-width half maximum'. **In** many cases, to define the bandwidth, or frequency selectivity, of a filter, reference is made to its so-called quality (Q) factor, a derived parameter that is commonly approximated as the ratio of the filter central frequency (i.e., corresponding to the maximum attenuation) to the value of the frequency range at the 'full-width half maximum' bandwidth of the filter. Outside the rejection region are the lower and upper pass bands of the filter, i.e. the frequency ranges over which a low level of attenuation of the input signal is guaranteed, located respectively below and above the frequency of maximum attenuation, and separated from the rejection zone by a transition region on each side of the filter central frequency. The extent of these two regions of high transmissivity thus defines the instantaneous bandwidth of the device, i.e. the set of frequency components that can be simultaneously processed by the filter. A third parameter useful in system applications is the rejection ratio, i.e. the ratio between the attenuation level at the filter's central frequency and the attenuation level outside the transition regions (the latter is typically considered to be the value of maximum attenuation in the pass bands).

**In** many applications, it is required to have simultaneously high values of the quality factor (i.e. a sufficiently narrow band), rejection ratio and instantaneous bandwidth, or at least as many of these parameters as possible.

For example, in an optical sensor based on the measurement of the frequency shift of the band rejection filter's central frequency in response to a changed environmental condition, high values of the quality factor and rejection ratio allow small frequency deviations to be discriminated even in the presence, as is typically the case, of noise in the system.

Similarly, in an application where the band rejection optical filter is used to build a band rejection filter in the radio frequency domain (e.g. for the suppression of interfering signals), high quality factor and large rejection ratio values are desirable. The advantage of performing this operation by means of signal processing techniques in the optical domain, as compared to electronic-based solutions, lies in the ability to largely reconfigure the central frequency of the optical filter, which turns into a corresponding broad spectral tuning of the central frequency in the RF domain (e.g. useful in a multi-channel system), whereas in electronic devices filter tuning is typically difficult and in any case limited to a narrow frequency range. The possibility of operating over a wide instantaneous bandwidth (e.g. of the order of several tens or hundreds of GHz), over which the central frequency of the band-rejecting optical filter can be positioned, is thus a further added value of the approaches based on signal processing techniques in the optical domain compared to electronic solutions for building radio-frequency filters. This requirement, which is reflected in the spectral extension of the upper and lower pass bands, is particularly desirable in microwave photonics filters because it allows for high-frequencies and widely reconfigurable RF filtering operation, e.g. over the entire 30-300 GHz millimeter-wave band which is of interest to emerging next-generation radio communication systems. Such wideband operation would indeed present additional complications using electronic-based approaches (a typical solution for covering sufficiently wide frequency ranges involves for instance the joint use of filter banks and switches for band selection, resulting in increased costs, complexity and system footprint).

There may also be cases where it is useful to be able to control the rejection ratio values, so as to optimize the performance of the system for a given application. This is the case, for example, with a particular type of microwave photonic filter based on the beat of asymmetrical sidebands.

Finally, the possibility of being able to vary the pass band value and/or modify the spectral transmissivity of the band-rejecting optical filter (e.g. by suitably extending the high rejection region) is clearly a further advantage for optimizing the performance of a system or extending its functionality.

Among the various methods of building band-rejecting optical filters, those based on waveguide technologies are of particular practical interest, as they allow exploiting the advantages offered by the miniaturization of the device, which are mainly associated with its high-volume production with a consequent decrease in manufacturing costs as well as the reduction of the footprint, weight, and power consumption of the device, which is of particular interest for applications in satellite or aircraft systems. In addition, performing an efficient filtering operation within a photonic waveguide integrated circuit - containing other functional elements such as laser sources, modulators, signal couplers/separators and others - permits to further extend the functionality of the circuit itself, enabling complex signal processing operations to be performed in a single miniaturized device. Among the several technologies available, the one based on the silicon-on-insulator platform offers in particular a high degree of miniaturization and compatibility with the manufacturing processes currently used for integrated electronics (i.e. a CMOS-compatible process), and as such is particularly suitable for large-scale production. Other platforms of current interest for the manufacture of waveguides for optical signals include those based on materials such as silicon nitride, group III-V semiconductors such as indium phosphide, or lithium niobate on oxide.

In this context, the methodologies proposed so far for building integrated band-rejection optical filters suffer from certain limitations with regard to the ability to simultaneously achieve low values of the rejection band (e.g. of the order of GHz or lower), high levels of signal rejection (greater than e.g. 30 dB) and/or the possibility of controlling its value, reconfigurability of the transmission function, and a large spectral region of high transmission.

In addition to these aspects, one must also consider the advantage that would be offered by a design of the device that would allow it to be manufactured using standardized technological processes for the production of waveguides, suitable for high-volume production, and that would not require excessive levels of accuracy in the definition of the waveguides themselves (i.e. with a certain tolerance for process inaccuracies).

One of the main techniques used for building band-rejecting optical waveguide filters (i.e. with integrated photonic technologies) is based on the use of micro ring resonators. In such devices, a waveguide closed in a ring shape builds an optical resonator, and an additional waveguide placed close to the ring waveguide is used to couple the input and output signal to the resonator. In some cases, the geometry of the resonator, instead of being a circular ring, consists of two semicircles joined by two straight guide sections (race-track type resonators). In these structures, for practical values of the losses incurred by the optical field propagating in the ring waveguide (whether circular or racetrack), certain frequencies of the incoming optical signal, corresponding to the ring resonances, are suppressed at the output more than others. The value of the attenuation introduced at the resonance depends on the coupling coefficient between the ring guide and the signal guide (determined in practice by the distance between them and their geometry) and there is an ideal coupling coefficient that provides the maximum attenuation at the center of the band. The frequency-dependent spectral response of a ring resonator is periodic, i.e. the filtering characteristic repeats itself at regular intervals, which in turn limits the extension of the upper and lower passbands of the band-rejecting optical filter to the spectral distance between two adjacent resonances, called the free-spectral-range of the resonator.

One of the known drawbacks of ring resonators is that their bandwidth and free-spectral-range cannot be chosen independently, since these quantities are linked to each other by the constitutive parameters of the structure. In particular, both the bandwidth of the high rejection region and the free-spectral-range of the resonator decrease with increasing the length of the ring guide. It follows that it is not possible to decrease the bandwidth of the band-rejecting optical filter indefinitely by increasing the length of the resonator without sacrificing the instantaneous bandwidth of the device due to the resulting decrease of the free-spectral-range.

Another factor affecting the bandwidth of a band rejection optical filter based on micro-ring resonators is the value of the propagation losses in the guide. In particular, the bandwidth decreases as the losses decrease, reflecting the typical property of a resonator to be more frequency selective, i.e. to support electromagnetic field distributions at well-defined frequencies, the more the signal propagates without attenuation within it.

In the case of silicon-on-insulator technology, many approaches have therefore focused on reducing the propagation losses of the silicon guide, which, using standard lithographic techniques compatible with the technology used for electronic devices (CMOS), are typically relatively high (although lower than those presented by the InP and LNOI platforms). One approach is to use specific processes for the fabrication of the guide, but these are either not compatible with CMOS technology and thus not suitable for large-scale production of the device, or they further process the circuit made with standard technology, which likewise increases the complexity and costs of its manufacture.

Alternatively, another solution identified in the literature involves the use of waveguides with a sufficiently large cross-sectional area, which makes it possible to reduce propagation losses due to the reduced interaction of the optical field with the surface roughness of the guide, which is responsible for scattering losses. A greater guide width, however, requires a significant increase in the radius of curvature in the ring structure in order not to incur high values of radiative bending losses, so that the ring length cannot be indefinitely decreased, again resulting in a compromise between the full-width half-maximum bandwidth and the free-spectral range of the resonator. In particular, the highest reported free-spectral-range values with this approach are below 20 GHz. To mitigate this effect, it was proposed the use of resonators in a race-track configuration, in which the straight section is made up of low-loss multi-mode guides, while the circular sections are made up of single-mode guides with a small radius of curvature. The corresponding increase in the free-spectral-range value that could be achieved with this method is, however, limited to around 40 GHz. In addition, the use of waveguides with a large cross-sectional area results in a more complex design of the coupling section of the ring resonator with the signal guide and of the interfaces between the curved and straight sections of the resonator, in order to avoid excitation of high-order transverse field distributions (modes) in the structure, resulting in undesired interference phenomena. By using a resonator consisting entirely of wide cross-section waveguides with low losses, a free-spectral-range greater than 100 GHz was achieved by means of a specific design of the coupling section, which acts as a filter for unwanted field modes.

Apart from the increased design complexity, in this structure, the rejection ratio observed for the optical band rejection filter is limited to a few dB. In fact, the reduction of losses in the structure implies that the optimum coupling coefficient between ring and signal waveguides that provides the maximum rejection at the center of the band decreases. Very small coupling coefficients are however difficult to obtain, due to the stronger sensitivity to the inaccuracies associated with the manufacturing process of the guides and also facilitates the unwanted effect of resonance-splitting, due to the establishment of a signal counter-propagating to the one injected into the resonator due to the high field values inside the guide for small coupling coefficients and low propagation losses. As a result, the rejection ratio for optical band-rejection filters with bandwidths of the order of 1 GHz or less based on micro ring resonators is typically less than 15 dB.

To increase the rejection ratio, it was proposed to insert the micro ring resonator inside a Mach-Zehnder-type interferometer in order to exploit not only the amplitude response of the resonator but also its phase characteristic and maximize the destructive interference at the ring resonance frequency for the signal at the interferometer output. In this way, a rejection ratio of 30 dB was demonstrated for sub-GHz optical filter bands, although the free-spectral-range of the filter is limited to about 40 GHz.

It is therefore an object of the present invention to provide a satisfactory solution to the problems set out above, while avoiding the drawbacks of the known art. In particular, the present invention aims to provide a band rejection optical filter arrangement having a sufficiently narrow rejection band, high values of rejection and signal rejection ratio, i.e. negligible attenuation outside the rejection band, and high values of the instantaneous band.

A further object of the invention is to provide an optical band-rejection filter arrangement that allows configuring its transmission function, e.g. that has the possibility to control the width of the pass band, the value of the signal rejection level and/or the rejection ratio in order to optimize the filter functionality according to the specific target application.

A further aim of the invention is to provide a band-rejecting optical filter arrangement that can be fabricated with lower manufacturing costs, minimized footprint and/or energy consumption than known solutions and can be integrated into a complex photonic circuit.

According to the present invention, these objects are achieved by a waveguide optical filter arrangement having the characteristics set out in claim 1.

Further subjects of the invention include a radio frequency signal filter circuit, a radio frequency signal generator circuit, an optical signal modulation circuit, a frequency multiplier or frequency comb generator circuit, a radio frequency signal transmission circuit over fibre, and a sensor circuit of a physical parameter of a sensing environment, as claimed.

Particular embodiments are the subject of dependent claims, the content of which is to be understood as an integral part of this description.

**In** summary, the present invention is based on the principle of building a band-rejection optical filter based on the Fabry-Perot type waveguide resonator configuration, in which an optical cavity is formed by placing a waveguide segment between two partially reflecting mirrors, which may also be built as waveguides and typically implemented in the form of 'distributed' Bragg mirrors by means of Bragg gratings.

The advantage of this approach lies in the possibility of building very short length resonators, wherein the spectral distance between adjacent resonances (i.e. the free-spectral-range) can be of up to several hundred of GHz, up to the point where only one resonance is supported within the Bragg mirrors band, which can extend up to the order of THz. Furthermore, the bandwidth of a Fabry-Perot cavity-based optical filter depends not only on propagation losses, but also on the reflectivity of the resonator mirrors which, in the case of distributed mirrors, can be controlled by an appropriate Bragg grating design.

A typical use of these devices is to exploit the transmissivity peak obtained at the resonances of the Fabry-Perot cavity between the signal input to one of the mirrors and the signal collected at the output of the second mirror, whereby a band-pass type filtering function is achieved. However, it is possible to obtain a band-rejection filtering characteristic if the field reflected by the same input mirror of the device, i.e. propagating in the opposite direction to the input signal, is considered as the output signal. In order to be able to discriminate the two counter-propagating fields that are on the same side of the device, a possible waveguide solution involves using an optical beam coupling/separation arrangement, i.e. a directional coupler, at the input to the device although this architecture presents an additional 6 dB loss (3dB for the input signal and 3dB for the reflected field).

The band rejection optical filter arrangement according to the invention allows for high rejection values (> 30 dB), a sufficiently small bandwidth (of the GHz range or less), and a sufficiently high value for the high transmissivity band adjacent to the rejection zone (e.g., greater than 100 GHz). These characteristics are particularly suitable for processing in the optical domain of radio-frequency signals in modern radio communication systems operating in the millimeter and sub-THz bands.

The proposed band rejection filter arrangement practically forms a Michelson interferometer, in the 'discrete' component version of which the input field (or signal) is separated by a first mirror on two branches, on each of which a further mirror is positioned reflecting the field (or signal) back to the input mirror, where the incident fields are separated towards the direction of the applied field (or signal) or one orthogonal to it according to the relative phase shift cumulated by the signals along the different optical paths.

Manufacturing of such devices in waveguide technology, using directional couplers and distributed mirrors have been demonstrated in the past. According to the invention, the distributed mirror on each branch is replaced by a Fabry-Perot type cavity whose resonance can be actively tuned. The reflected fields (or signals) to the directional coupler then undergo amplitude and phase processing due to the complex reflectivity characteristic of the cavities. In particular, the phase response applied to the original field (or signal) is exploited to be converted into an amplitude response much more evident than that of the single isolated cavity, by appropriate separation of the resonances of the two cavities and the optimization of the relative phase shifts between the two arms of the interferometer by means of the optical phase shifters outside the cavities.

In this way, it is possible to implement a band-rejecting filter transmission characteristic, which simultaneously exhibits a high rejection ratio level value along with a bandwidth value determined by the individual Fabry-Perot cavities, for which the rejection ratio is limited by field losses. In addition, the high free-spectral-range characteristic of integrated Fabry-Perot cavities is preserved, in which a single resonance (or a limited number of resonances) can be defined within the reflection spectrum of the distributed mirrors (which can be up to a few THz). The same external cavity optical phase shifters can be exploited to control the maximum attenuation introduced by the filter (resulting in a changed partially destructive interference condition), while both internal and external cavity phase shifters can be optimized to shape the spectral response of the filter.

Further features and advantages of the invention will be set out in more detail in the following detailed description of an embodiment, given as a non-limiting example, with reference to the accompanying drawings, in which
Figure 1 is a schematic representation of a Fabry-Perot type integrated resonator with tunable resonance frequencies;
Figure 2 is a schematic representation of the optical waveguide filter of the invention;
Figure 3 is a schematic representation of a 2x2 waveguide four-port directional coupler;
Figure 4 is a schematic representation of a different embodiment of the optical waveguide filter of the invention;
Figure 5 is a schematic representation of one embodiment of an integrated Fabry-Perot type optical resonator in silicon-on-insulator technology;
Figure 6 shows two diagrams illustrating the amplitude response (transmissivity) (left) and phase response (right) response of an integrated Fabry-Perot type optical resonator built with distributed Bragg mirrors;
Figure 7 shows two diagrams illustrating the amplitude response (transmissivity) (left) and phase response (right) of two integrated Fabry-Perot type optical resonators in the optical filter configuration of Figure 2;
Figure 8 shows two diagrams illustrating the phase of the signals reflected by the integrated Fabry-Perot type optical resonators in the optical filter configuration of Figure 2, emerging at the output port of the directional coupler device of said filter;
Figure 9 shows a diagram indicative of the transmissivity or amplitude transfer function of the optical filter in Figure 2;
Figure 10 shows a diagram indicative of the transmissivity or amplitude transfer function of the optical filter of Figure 2, as a function of different values of the relative phase shift between the signals emerging at the output port of the directional coupler device of said filter;
Figure 11 shows an examplary transmissivity diagram of an optical filter according to the invention;
Figure 12 shows diagrams indicative of the operation of an optical filter according to the invention, following experimental verification;
Figure 13 is a diagram illustrating the tuning of the maximum attenuation value of an optical filter according to the invention, following experimental verification;
Figure 14 is an diagram indicative of the shaping of the optical filter according to the invention, following experimental verification;
Figure 15 is a block diagram of a filter circuit for processing RF signals based on an optical band rejection filter according to the invention;
Figure 16 is a block diagram of an RF signal generator circuit based on an optical band rejection filter according to the invention;
Figure 17 is a block diagram of a signal modulation circuit based on an optical band rejection filter according to the invention;
Figure 18 is a block diagram of a frequency multiplier circuit based on an optical band rejection filter according to the invention;
Figure 19 is a block diagram of a radio-over-fiber transmission circuit based on an optical band-rejection filter according to the invention;
Figure 20 is a block diagram of a sensor circuit based on a band rejection optical filter according to the invention; and
Figures 21-23 are schematic representations of alternative embodiments of an integrated resonator of the Fabry-Perot type with tunable resonance frequencies.

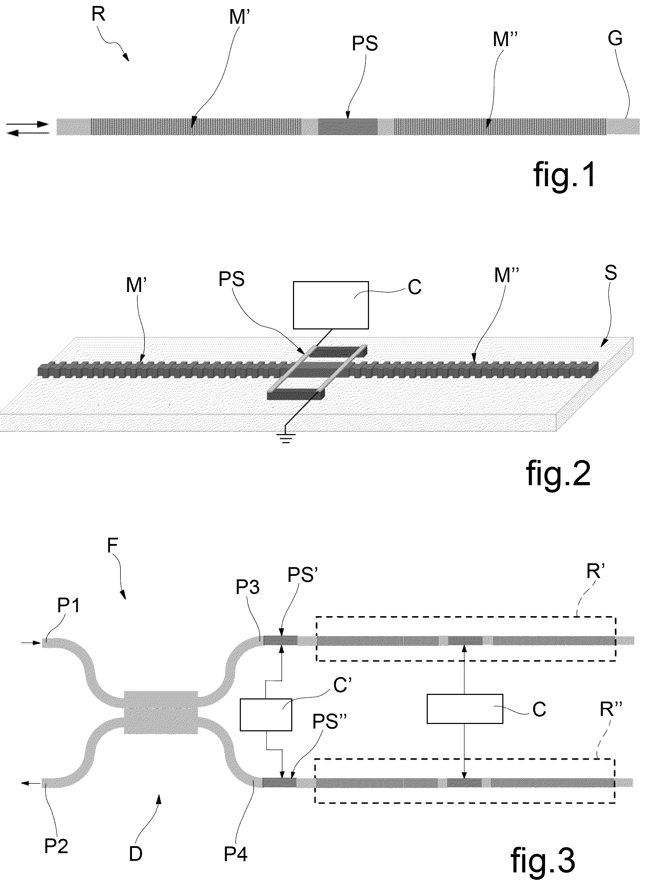

Figures 1 and 2 show an optical Fabry-Perot type cavity built in waveguide technology forming an optical resonator, a component of the band-rejection filter of the invention.

More specifically, a schematic representation of an integrated Fabry-Perot-type resonator with tunable resonant frequencies is shown in Figure 1. The resonator is collectively denoted R and is built in an optical waveguide G, e.g. a silicon (Si) track on a silicon oxide (SiO₂) substrate. It comprises a pair of mirrors M' and M", e.g. built as distributed Bragg grating mirrors, which are connected to each other by a waveguide section in which the phase shift introduced on a propagating optical field within it can be controlled by an optical phase shifter PS controlled by a control circuit C. At a connection port of the resonator, corresponding to a first mirror, the directions of input and output of an optical field in general, more particularly of an optical signal to be processed, are indicated with arrows. The mirror M' at the connecting port (called the input mirror) has a reflectivity of less than 100%, whereas the second mirror M" may have reflectivity less than or equal to 100%.

Figure 2 shows a possible embodiment of the integrated Fabry-Perot-type optical resonator of Figure 1 in silicon-on-insulator technology. The distributed mirrors M' and M" are made of a periodically corrugated optical waveguide section (i.e., whose lateral section have two different values repeated at regular intervals) made of silicon (Si) on a silicon-oxide (SiO2) substrate S. The period of the side corrugation and its depth (i.e., the difference between the width of the two sections) in the corrugated waveguide that makes up the distributed mirror is chosen to determine an appropriate operating region of the mirror (i.e., the set of wavelengths over which a reflectivity of not less than a certain amount of its nominal value is guaranteed), and are typically the same for both mirrors. The number of periods of the corrugation, for a given value of its depth, allows the nominal reflectivity (i.e. at the center of its operating band) of each mirror to be established independently. The two mirrors are connected by a non-corrugated guide section in such a way as to form a distributed optical cavity of proper length between the two corrugated waveguide sections. The total length of the cavity at the center of the mirror band is given by the sum of the non-corrugated guide section and the equivalent lengths of the mirrors, which take into account the penetration of the optical field into them. The phase of the optical field propagating within this cavity can be changed by exploiting, for example, the thermo-optical effect in the silicon waveguide, which produces a change in the refractive index of the material (and consequently of the effective index of the waveguide). This makes it possible to tune the wavelength of the resonances supported by the distributed cavity (i.e. those for which the phase shift accumulated during propagation over a complete round-trip within the cavity is an integer multiple of 360°). Other tuning mechanisms that are not necessarily thermal (e.g. electro-optical, which is theoretically faster) may be used, the optimal choice being dependent on the technological platform (i.e. the materials) that is used to build the integrated waveguide resonator. In the case of the Silicon-on-Insulator platform, the thermo-optical mechanism is achieved by means of two heaters made of doped silicon, i.e., in which a certain amount of atoms of another material, typically Boron (B) or Phosphorus (P), has been implanted to suitably alter the electrical conductivity, positioned symmetrically at the sides of the waveguide near its non-corrugated section and driven by a predetermined control voltage. An alternative method is to place a metal heater above the guide (using a suitable oxide layer, called "cladding", to avoid direct contact of the metal with the optical guide). The two techniques can be combined to ensure independent tuning both of the cavity resonance and of the operating region of the distributed mirrors.

A schematic representation of the band rejection optical waveguide filter arrangement F of the invention is shown in Figure 3.

The arrangement comprises a four-port (P1-P4) directional optical coupler D in which one of its ports P1 collects the optical field input to the device. The signal is then separated on the two ports (P3, P4) on the opposite side of the input port. The separation ratio is considered to be ideally 50%. Each of the two replicas of the input field is then sent to two identical Fabry-Perot type integrated optical resonators R' and R" of the type shown in Figures 1 and 2, whose resonant frequencies can be tuned. The reflected optical fields from the R' and R" resonators are again directed towards the directional optical coupler D. The two fields are then collected at the same ports (P3, P4) on which the original signal was separated and are recombined within the directional optical coupler D, again with an ideal coupling ratio of 50%. The resulting field component emerging from the second port P2 of the directional optical coupler positioned on the same side as the input port P1 represents the output signal of the filter. An optical phase shifter is arranged on at least one of the two branches connecting one of the ports P3, P4 of the 2x2 directional optical coupler D to a resonator R' or R", and in the illustrated embodiment an optical phase shifter PS' and an optical phase shifter PS", driven by a control circuit C', are respectively arranged on each of the branches connecting the ports P3 and P4 of the 2x2 directional coupler D to the respective resonator R', R".

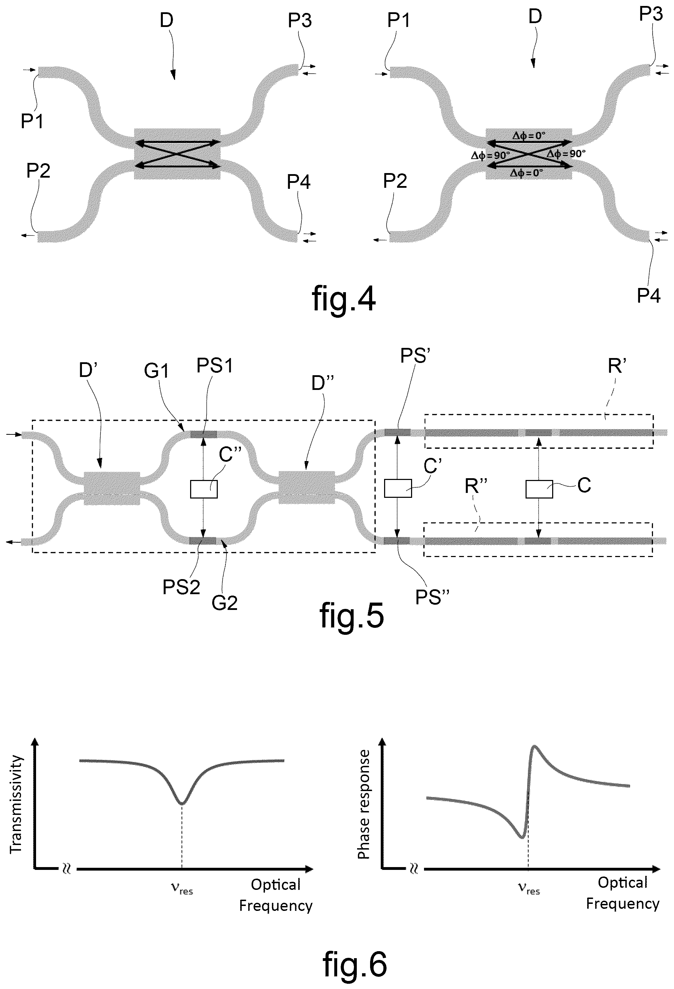

Figure 4 shows a schematic representation of a four-port 2x2 directional coupler D in a waveguide where the different possible connections between the various ports, and the corresponding relative phase shifts introduced between the signals routed between the ports at the two sides of the device, are illustrated.

In an embodiment variant, the directional optical coupler D is built in such a way as to provide a variable beam coupling/separation ratio. The band rejection filter arrangement in this variant embodiment is shown in figure 5. The directional coupler D of Figure 3 is replaced by a pair of fixed-ratio directional couplers D' and D" connected via two waveguides of identical length G1 and G2 and whose relative phase shift can be controlled by a respective electro-optical or thermo-optical optical phase shifter device PS1, PS2, driven by a control circuit C", to compensate for possible asymmetries of the directional couplers and optimize the filter characteristics.

Figure 6 shows an example of amplitude (left) and phase (right) response of a Fabry-Perot type integrated optical resonator R built with distributed Bragg mirrors, in the presence of optical losses. By resonator R is meant the resonator shown in Figures 1 and 2, i.e., the resonators R' and R" arranged in the band rejection filter arrangement of the invention, shown in Figures 3 and 4. At the resonance frequency, *vᵣₑₛ,* the transmissivity exhibits a minimum. The bandwidth of the resonance (i.e. the frequency components that undergo attenuation and/or phase shift) is determined, in addition to the cavity losses, by the reflectivity of the resonator mirrors which, in the case of distributed mirrors, can be controlled by the number of periods within the corrugated waveguide. Due to the presence of losses, the minimum transmissivity is greater than 0. The phase response exhibits a rapid variation around the resonance frequency, in which the frequency components in proximity of the resonance at values larger and lower than *vᵣₑₛ* undergo a phase shift of opposite sign. As the frequency distance *vᵣₑₛ* increases, the phase response tends to be the same for all frequencies. Due to optical cavity losses, the maximum phase excursion is less than 180°.

In the band-rejecting filter arrangement of the invention, each of the optical cavities of the resonators R', R" provides a reflected version of the input field, which exhibits attenuation at certain frequency values in its spectrum (corresponding to the resonance frequencies *vᵣₑₛ* of the cavity), while an additional phase shift is introduced around the resonance, the sign of which has opposite values depending on whether frequencies greater or lower than the resonant frequency are considered. In particular, at frequencies immediately above the resonance *vᵣₑₛ* a positive phase shift peak occurs (phase delay), whereas at frequencies immediately below the resonance a negative phase-shift peak (phase advance) occurs. For frequencies sufficiently higher or lower than the resonance frequency, the additional phase shift relative to it is zero. Due to the prevailing losses for the optical field in the cavity (including the contribution of distributed mirrors), the amplitude response has a limited maximum attenuation value, while the steepness of the phase transition is proportional to the full-width-half-maximum of the transmissivity characteristic.

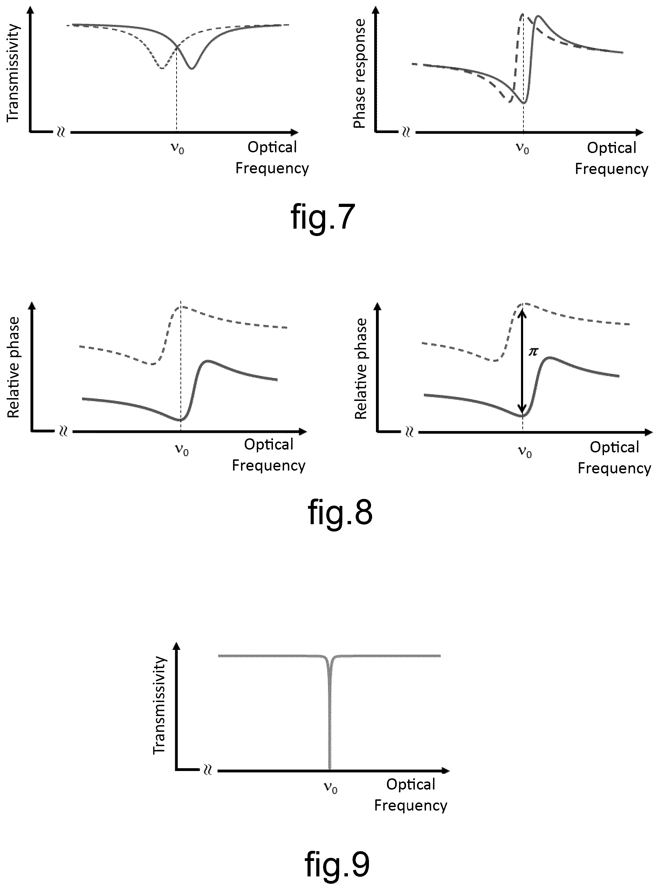

The optical phase shifter PS arranged within each cavity allows the frequency separation between the resonances of the two cavities to be finely controlled. In particular, the resonances of each cavity can be brought to a frequency separation such that, considering the change of sign of the phase response around the resonance, the frequency of maximum phase shift (positive, or phase delay) around the resonance of a first cavity coincides with the frequency of minimum phase shift (negative, or phase advance) around the resonance of the second cavity. Thus, the two cavities introduce a maximum relative phase shift for the reflected signals at an intermediate frequency between the two resonances v₀. Figure 7 shows the amplitude (transmissivity) and phase response of the two resonators R', R" of the band rejection filter arrangement of the invention when the respective resonance frequencies are tuned by means of the optical phase shifters placed inside the cavities of the resonators R' and R", so as to align the maximum of the phase response of one cavity with the minimum of the phase response of the other cavity at the intermediate frequency v₀ between the two resonances. In the case of identical response of the two integrated optical cavities, the transmissivity values are the same for the two resonators R' and R" at v₀.

The four-port (2x2) directional coupler D with a coupling/separation ratio of 50% routes the signal applied to the input port P1 to the two resonators R' and R", and collects from ports P3 and P4 the signal reflected from the two resonators R' and R", routing it either to port P2, called the output port, on the same side as the input port, or to the same input port P1, according to the relative phase shift and amplitude of the two signals reflected by the resonators R' and R". In particular, if the two reflected signals have the same amplitude, the composite signal is routed completely either to the input port P1 or to the output port P2 in the case of a relative phase shift between them of 90° (save for a factor of 360°) at the input of the coupler. This is because, by applying the signal to a given port of the directional coupler, an additional phase shift of 90° is introduced for the signal coming out of the port on the opposite side which is not aligned with it compared to the signal coming out of the aligned port (see Figure 4). It follows that in the case where the signal reflected from resonator R' and routed to the coupler's port P3 aligned with the device's input port P1 has a phase delay of 90° (save for a factor of 360°) with respect to the signal reflected from resonator R" and routed to the port P4 and assuming the two signals have the same amplitude, a completely destructive interference condition will occur for signals emerging on the opposite side of the coupler to the output port P2 of the filter (relative phase shift equal to 180° or odd multiples of 180°). This situation corresponds to the (ideal) case of no field at output port P2 of the filter. Note that since the factor of 360° by which the destructive interference condition at the output port is maintained can also be negative, the same result is obtained in the case where the signal reflected by the resonator R' connected to the port P3 of the directional coupler aligned with the input port P1 of the filter has a phase advance of 270° (save for a factor of 360°) with respect to the signal reflected by the second resonator R"

At least one of the optical phase shifters PS' and PS" placed between the directional coupler D and the resonators R' and R" introduces a suitable additional phase shift on one (or both) of their respective resonator connection branches such to obtain, at the intermediate frequency v₀, the phase opposition condition (absolute relative phase shift equal to odd multiples of 180°) for the signals re-emerging from the filter output port P2. The phase shifts introduced by phase shifters PS' and PS" can be controlled and are driven by a circuit independent of the circuit C controlling the internal phase shifters PS in the resonator cavities. In the case of symmetrical behavior (i.e., equal amplitude and phase transfer function of the integrated optical cavities building the resonators R' and R", ideal 50% separation ratio of the directional coupler D, and same attenuation level for the signals on the various paths), this results in two fields of equal amplitude and opposite phase at the filter output, i.e. complete cancellation of the optical field by totally destructive interference at the intermediate frequency v₀.

It should be noticed that due to the different possible phase advance or phase delay situations for signals reflected by the resonators R' and R" which determine the phase opposition condition at the filter output port, it is indifferent which of the two resonators, R' or R", presents the maximum or minimum phase response at the intermediate frequency, since it is always possible to act via the optical phase shifters PS' and PS" outside the resonators to reach one of the aforementioned maximum destructive interference conditions at the intermediate frequency.

An example of the possible phase pattern for the fields (or signals) at output port P2 of the filter fulfilling the condition of totally destructive interference is shown in Figure 8, where a phase delay of 180° is obtained at the output port P2 of the filter between the maximum phase of the field (or signal) coming from the coupler port P4 aligned with it and the minimum phase of the field (or signal) coming from the other coupler port P3. In this case, the resonance of the R" resonator connected with the P4 coupler port aligned with the P2 output port of the filter is at a lower frequency than the other resonator's resonance. By reversing, for example, the relative position of the two resonators, the same result of destructive interference could have been obtained by having a 270° phase advance for the reflected field (or signal) towards coupler port P4 aligned with the output port P2 (i.e., an appropriate additional phase value on the other branch), with respect to the field (or signal) reflected towards port P3, to obtain a relative phase shift with an absolute value of 180° at the output of the filter at the intermediate frequency, where the resonator R" aligned with output port P2 now has a minimum phase response.

These situations represent the case where the phase shift of 180° (save for a factor of 360°) is the maximum phase offset between the two replicas of the field (or signal) at all frequencies of interest for the signal to be filtered. It follows that at frequencies other than v₀ the optical field is partially transmitted towards the output port P2. It is also possible to reach the interference condition in which the 180° phase shift between a minimum and a maximum of the phase response of the fields (or signals) emerging from output port P2 of the directional coupler is the minimum over the entire signal band. Again, by virtue of the phase excursion introduced by the resonators being limited to values lower than 180°, outside the phase transition region the optical field (or signal) is transmitted to the filter output.

It is in general possible to obtain a 180° phase shift condition at a specific field (or signal) frequency at the output port by acting on both the internal phase shifters of the resonators and those outside them, whereas for all other signal frequencies the relative phase shift is different from 180°.

Figure 9 shows the amplitude transfer function of the band rejection filter of the invention (assuming a constant optical field at the filter input) under the relative phase shifting conditions shown in Figure 8. At the intermediate frequency between the two resonant frequencies, v₀, the two fields (or signals) emerging from the output port P2 of the directional coupler D, coincident with the output port of the filter, have equal amplitude and a relative phase shift of 180°, and therefore interfere in a completely destructive manner, with zero resulting amplitude. For frequencies greater and less than v₀ the two fields (or signals) have a relative phase shift of less than 180° and different amplitudes and thus interfere partially constructively. Consequently, the resulting optical field amplitude is different from-zero.

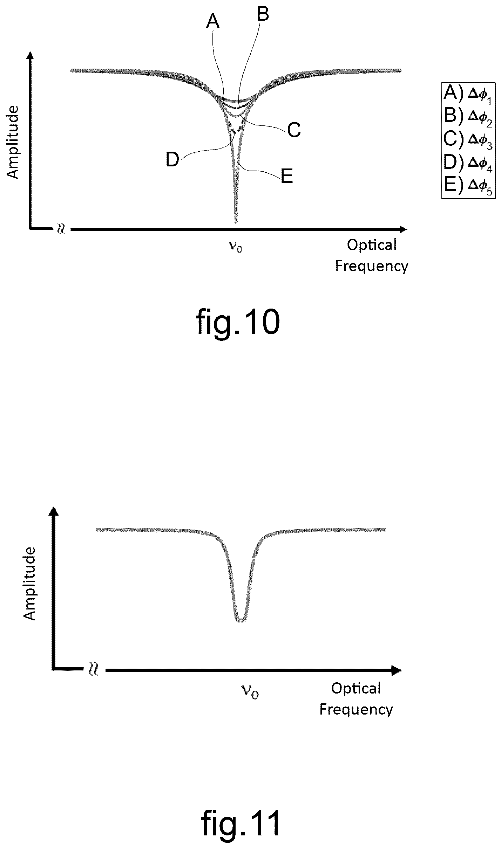

By tuning the optical phase shifters PS' and PS" outside the resonators, it is possible to change the destructive interference condition (from total to partial) so that the maximum attenuation value at frequency v₀ can be continuously varied. Figure 10 shows an example of controlling the maximum value of attenuation provided by the filter of the invention, for five different values of the relative phase shift Δ*Φ* between the two fields (or signals) emerging from port P2 of the directional coupler connected to the filter output (indicated by curves A-E). By means of the optical phase shifters PS' and PS" placed between the directional coupler D and the resonators R' and R" it is possible to tune the phase shift value Δ*Φ* , i.e. changing the interference condition from (nearly) fully to partially destructive, which determines the filter rejection ratio, such to provide the desired attenuation between a minimum and a maximum value at the intermediate frequency v₀.

Finally, by acting on both the phase shifters inside the resonators R', R" to properly increase the frequency distance between the two resonances, and on the phase shifters PS', PS" outside the resonators, it is possible to shape the spectral attenuation characteristic to obtain a more "squared" transfer function. Figure 11 shows an example of shaping the filter of the invention by simultaneously controlling the optical phase shifters inside the resonators (to set a proper frequency separation between the two resonances) and external optical phase shifters placed between the resonators and the directional coupler (to introduce a proper phase shift value between the reflected fields - or signals - emerging from the directional coupler), and obtain a more 'squared' filter response.

Advantageously, a directional coupler D with a variable coupling/separation ratio as shown in Figure 5 allows a coupling/separation ratio of exactly 50% to be obtained even in presence of manufacturing imperfections that do not allow this value to be achieved with the necessary precision in a fixed-ratio directional coupler and/or to optimize the performance of the filter in the case of asymmetries in the amplitude response of the two resonators around the resonant frequencies (again due to manufacturing imperfections) by adapting the coupling ratio to provide the same amplitude level for the signals which, after being reflected by the resonators, emerge towards the output port of the filter.

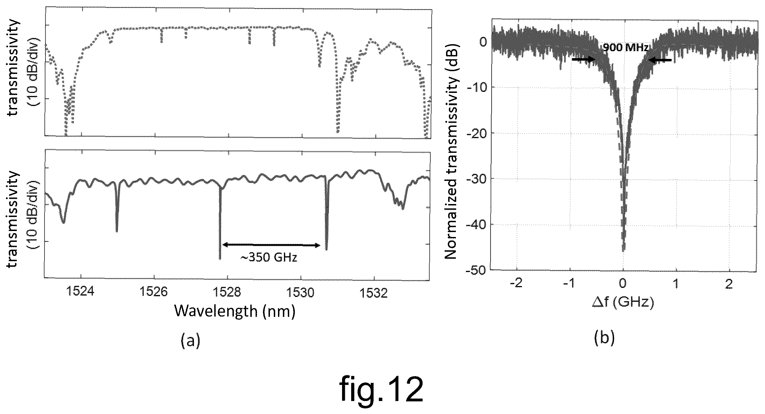

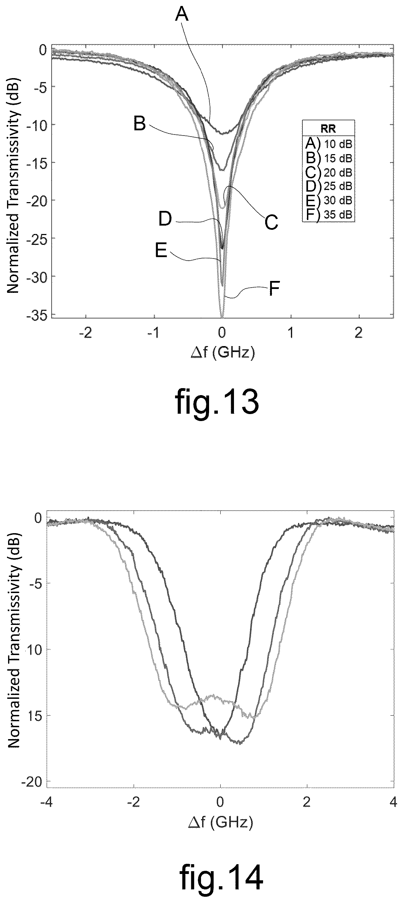

Figures 12, 13 and 14 show exemplary transmissivity and normalized transmissivity diagrams obtained from experimental verifications of the operation of the band rejection optical filter of the invention, which demonstrate the achievement of a high quality factor Q, high attenuation ratio, and large free-spectral-range level. Figure 12(a) shows the optical transmission spectrum of the filter over a wavelength range of about 10 nm, in the case of non-optimized (upper diagram) and optimized (lower diagram) position of the resonances, from which a frequency distance between adjacent resonances of about 350 GHz is shown. Figure 12(b) shows details of the transfer function around the transmission minimum positioned around 1528 nm as a function of the deviation from its absolute frequency Δf, and the corresponding fitting curve to the measurement data (dashed line), in the case where the various optical phase shifters in the filter are controlled to achieve an attenuation value greater than 40 dB. The corresponding full-width-half-maximum band has a value of approximately 900 MHz. The measurements refer to a circuit built by means of silicon-on-insulator technology; other photonic integrated circuits technologies can be adopted for building the filter and achieve similar results. Figure 13 shows the results of an experimental verification of the tuning of the maximum filter attenuation value (from 10dB to 35dB, curves A-F). Figure 14 shows the results of an experimental verification of filter shaping, for different values of the spectral width of the minimum attenuation region.

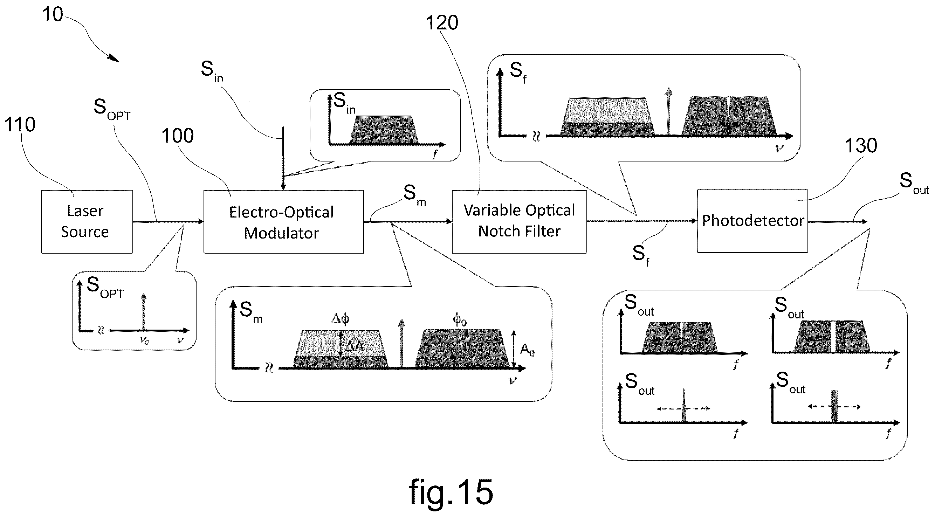

There may be numerous uses for the band-rejecting optical filter that of the invention, and some of them will be briefly disclosed below, with reference to Figures 15-20.

### • Filtering of radio frequency signals

Optical band rejection filters are commonly used for filtering operations on radio frequency signals, either of band-rej ection (notch) or band-pass types. A block diagram of a filter circuit 10 for processing RF signals based on an optical band rejection filter according to the invention is shown in Figure 15. The spectra of the optical and RF signals along the device chain are shown in the figure.

A radio frequency signal Sᵢₙ on which the filtering operation is to be applied is applied to a radio frequency control input of an electro-optical modulator 100, which receives at an optical input a continuous wave optical signal S_{OPT} from a laser source 110, by means of which the radio frequency signal is converted to optical frequencies by a modulation technique. The modulated signal Sₘ, i.e., the signal at the output of the modulator 100, is applied to a band rejection optical filter 120 according to the invention, from which a filtered signal S_{f} emerges in which at least one component or spectral portion of the modulated signal Sₘ is suppressed, and a photodetector 130 (e.g., a photodiode) arranged in series with the filter, capable of re-converting the components around the optical carrier to radio frequencies, outputs an output signal Sₒᵤₜ which is a filtered version of the input RF signal Sᵢₙ,

In the most generic case (shown in the inset of the figure that illustrates the spectrum of the signal) the spectrum of the modulated optical signal Sₘ is formed, in addition to the original carrier, by a pair of sidebands with maximum amplitude A₀, at frequencies greater and less than the carrier, with a relative phase shift Δ*Φ* and a difference of amplitudes Δ*A*. For example, in the case of double sideband amplitude modulation with a Mach-Zehnder modulator Δ*Φ* = 0 e ΔA = 0 and ΔA= 0, whereas in the case of single sideband amplitude modulation ΔA= A0 and in the case of phase modulation, ΔΦ= 180° and ΔA= 0. The generic case shown in the figure can be achieved via a device known as a dual parallel Mach-Zehnder modulator, or via a Mach-Zehnder amplitude modulator or phase modulator followed by an additional sideband processing stage.

The modulated signal Sₘ is then sent to the optical filter 120 which introduces selective attenuation within the higher amplitude sideband (or within the unique sideband in the case of single sideband modulation), the depth and shaping of which can be controlled as described above. In particular, for the case shown in the figure of modulation with asymmetric sidebands amplitude, the filter attenuation can be optimized to equalize the two sidebands at a particular frequency at the output of the device. If the relative phase shift between the two bands Δ*Φ* is such that the attenuated and the symmetrical frequency component with respect to the optical carrier exhibit a phase difference of 180°, their beat with the carrier in the photodetector 130 will interfere in a fully destructive manner, thus realizing band rejection filtering in the electrical domain. The possibility of varying the attenuation depth of the optical band-rejection filter provides an additional degree of freedom that allows to set a desired level for the unbalancing of the sideband amplitudes which can be advantageous for optimizing other filter characteristics (e.g. residual attenuation at frequencies outside the rejected band, or the signal-to-noise ratio of the optical signal). A similar filtering characteristic can be achieved by using single sideband modulation and maximizing the attenuation of the integrated optical filter as described above. In this way, a less complex device can be used without unduly degrading the performance that can be achieved with the dual parallel Mach-Zehnder modulator. If, on the other hand, the two sidebands have equal amplitude and a relative phase shift of 180° (spectrum corresponding to the optical phase modulation case), the selective cancellation of the frequency components of one of the two sidebands produces at the output of the photodetector 130 a band-pass type RF filtering characteristic. Exploiting then the tuning and shaping properties of the optical filter, it is possible to tune and/or shape the corresponding band-rejecting/band-pass RF filter. These possible output signal configurations are shown in the corresponding figure insert.

The filter circuit for processing RF signals can therefore be advantageously built entirely on an integrated photonic circuit.

In these applications, the main advantage of using photonics is given by the ability to largely reconfigure the filter (i.e., tuning of the central frequency) and operate over a wide spectral range. The latter feature in particular benefits from the use of resonators based on integrated Fabry-Perot-type cavities which, unlike resonators based on micro ring resonators, can more suitably support resonances with narrow full-width-half-maximum and large free-spectral-range values. The reconfigurability of the RF filter is ensured by the possibility of adjusting the central frequency of the optical filter over wide spectral values, by means of the optical phase shifters inside the optical cavities of the resonators R' and R", and by the possibility of varying the maximum attenuation value by acting on the optical phase shifters PS', and PS" arranged on the branches connecting the resonators to the directional coupler D. The latter feature is, for example, useful in operations where RF filtering (both band-pass and band-rejecting) is based on the beat of two asymmetrical optical sidebands in a photodetector and introduces an additional degree of freedom for performance optimization and/or simplification of the RF filtering operation. Finally, the possibility of shaping the rejection band represents a further advantage towards filter reconfigurability and/or performance optimization in certain applications, e.g. to build both band-cut and band-pass filters for signals with non negligeable frequency content, or to increase the stability against fluctuations of the filter central frequency due to environmental conditions.

### • RF signal generation via opto-electronic oscillators

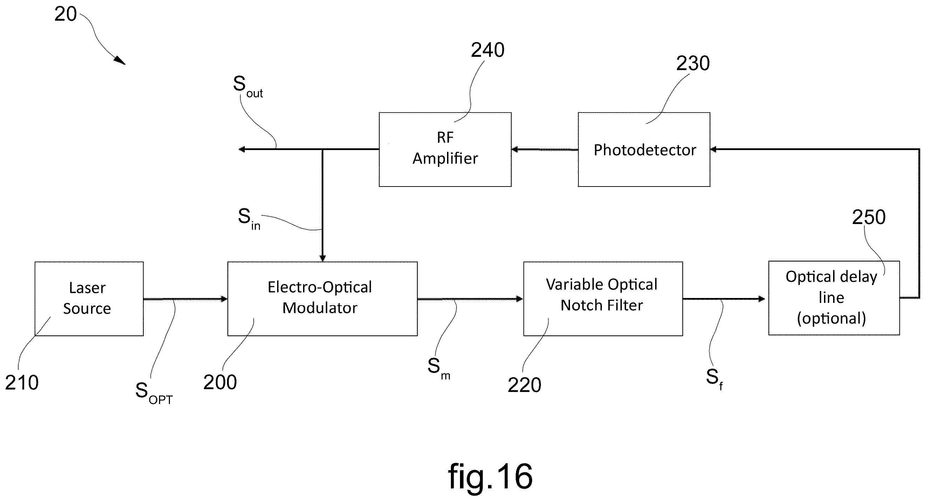

A block diagram of an RF signal generator circuit 20 using an opto-electronic oscillator, based on an optical band-rejection filter according to the invention, is shown in Figure 16.

The circuit diagram in Figure 16 is based on a similar filtering technique to that described with reference to Figure 15, and the same components are shown with identical or corresponding references. A radio-frequency signal Sᵢₙ is applied to a control input of an electro-optical modulator 200, which receives at an optical input an optical signal S_{OPT} from a laser source 210. The modulated signal Sₘ, i.e. the signal present at the output of the modulator 200, is applied to a band-rejecting optical filter 220 according to the invention, from which a filtered signal S_{f} emerges, and a photodetector 230 (e.g., a photodiode) arranged in series with the filter emits an output signal Sₒᵤₜ through an amplifier at radio frequencies 240.

The output signal from the photodetector 230 is used as feedback for the electro-optical modulator 200, thus realizing a closed opto-electronic loop, and at the same time providing the generated output signal of the system. An optical delay line 250 (e.g., optical fiber) can be used for greater stability of the signal circulating in the loop. If fiber components are not used, the entire scheme can be built on a photonic integrated circuit.

In this case, the RF filtering operation is incorporated within a feedback loop comprising both electronic and electro-optical components, resulting in an opto-electronic oscillator. The transfer function of the band-pass type RF filter based on the optical filter 220 of the invention is exploited to generate a stimulus at a given frequency component which is sustained by the feedback loop permitting the generation of a radio frequency oscillation. The spectral purity of the generated signal is related to the bandwidth of the optical band rejection filter in addition to the presence of a possible optical fiber delay line, and its center frequency can be varied by varying the center frequency of the filter itself. As in the case of RF filtering, the possibility of having small bandwidths, high rejection levels and wide tuning intervals in the optical filtering operation allows in principle for the reduction of noise in the generated RF signal and for a wide reconfiguration of its center frequency.

### • Implementation of modulation techniques

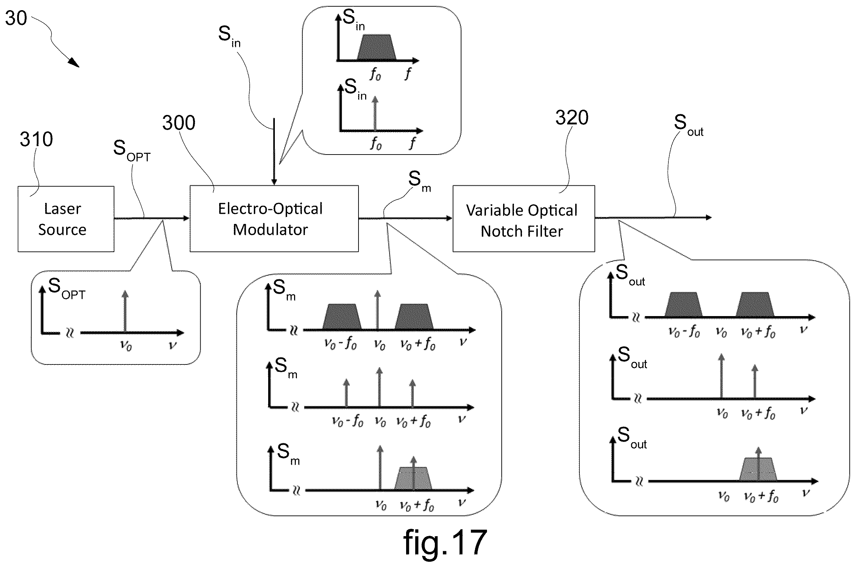

Figure 17 shows a block diagram of a signal modulation circuit 30 based on an optical band rejection filter according to the invention.

Optical transmission systems, similarly to radio frequency transmissions, are based on different modulation techniques for signal transmission, which differ according to spectral content. Dual sideband modulation with carrier is the simplest to implement. In the transmission of radio signals over optical fibre (radio-over-fiber), however, this modulation technique suffers from an effect known as RF power fading, whereby the RF signal strength obtained after the optical link through photodetection is strongly dependent on the distance of the link itself and on the frequency of the transmitted RF signal. It can therefore be advantageous to use modulation techniques such as double sideband with suppressed carrier or single sideband with carrier to eliminate this effect. Double sideband modulation with suppressed carrier can be achieved with an electro-optical modulator of the Mach-Zehnder type with a specific choice of operating point of the device, but this method provides limited levels of carrier rejection and a medium-to-long-term instability of the operating point that requires the use of control mechanisms that introduce additional complexity to the system. In addition, operating a Mach-Zehnder modulator close to the point of maximum carrier suppression typically entails having to reduce the amplitude level of the sidebands (which contain the useful signal component) in order not to suffer from non-linear effects related to the modulator's transfer characteristic, thus worsening the signal-to-noise ratio at the receiver and ultimately the quality of the transmission.

The circuit diagram of figure 17 is analogous to that described with reference to figure 15, and the same components are shown with identical or corresponding references. A radio frequency signal Sᵢₙ is applied to a control input of an electro-optical modulator 300, which receives at an optical input a continuous wave optical carrier signal S_{OPT} from a laser source 310. The modulated signal Sₘ, i.e., the signal present at the output of the modulator 300, is applied to an optical band rejection filter 320 of the invention, from which a modulated output signal Sₒᵤₜ emerges.

The modulating signal Sᵢₙ applied to the electro-optical modulator 300 may have discrete frequency content, centered around frequency f₀, or may be of sinusoidal type (continuous wave, i.e., consisting of a single tone at frequency f₀), both shown in the inset of the figure displaying the spectrum of the signal Sᵢₙ. The modulated signal converted to optical frequencies Sₘ at the output of the modulator 300 may be either double or single sideband with carrier, or double or single sideband with suppressed carrier. These possible configurations of the modulated signal are shown in the corresponding inset of the figure. In the case of a double sideband signal, either a Mach-Zehnder type amplitude modulator or a simple phase modulator can be employed, while the case of single sideband modulation requires a dual-drive or dual-parallel Mach-Zehnder type amplitude modulator. By positioning the maximum attenuation frequency of the optical band-rejection filter 320 at the optical carrier frequency (suppression of the v₀ component), it is possible to achieve carrier-suppressed single or dual sideband modulation when the input signal is dual sideband with carrier type, or single sideband (either modulated or continuous wave) with carrier type, respectively. These possible output signal configurations are shown in the corresponding inset of the figure. Carrier-suppressed dual sideband modulation can be used for the transport of radio signals in radio-over-fiber systems to avoid the phenomenon of RF power fading associated with the chromatic dispersion of the optical fiber. The single-sideband carrier-suppressed modulation format (which, in the case of a continuous-wave modulating signal, performs the frequency-shifting operation) is useful for the processing of RF signals, e.g. in beam pointing systems in phased array antennas, or for intermediate frequency conversion of a RF signal. In the case of dual sideband and continuous-wave input signal, by positioning the maximum attenuation of the band-rejecting optical filter 320 at the frequency of one of the two sidebands (in the case shown, the one positioned at v₀-f₀), the obtained single sideband format is again suitable for carrying an RF tone in a radio-over-fiber link without the degradation introduced by power fading effect. In the case of non-negligible frequency content of the modulating radio signal, it is possible to exploit the spectral response shaping property of the optical band rejection filter according to the invention for the suppression of one of the two sidebands at the output of the electro-optical modulator.

Advantageously, the use of an optical band-rejection filter according to the invention for performing such modulation techniques makes it possible to simplify the architecture of the electro-optical modulator and guarantees a high quality and stability of operation due to the properties of high suppression ratio or shaping possibilities in the filter spectral response.

More specifically, using band-rejection optical filter with high suppression ratio at the output of a Mach-Zehnder modulator operating at the point of maximum linearity of its transmission function, and whereby a high level for the carrier component is present in the output spectrum, a double sideband signal with suppressed carrier can be produced without having to reduce the sideband amplitude level and/or introduce non-linearity degradations on the signal. The possibility of being able to tune the wavelength of the band-rejecting optical filter by means of phase shifters in the optical cavities is clearly an advantage, as it allows fixed wavelength laser sources (cheaper than variable wavelength laser sources) to be used, and also enables the use of this approach in a multi-channel system in which each channel is associated with a specific wavelength.

### • Frequency multiplier

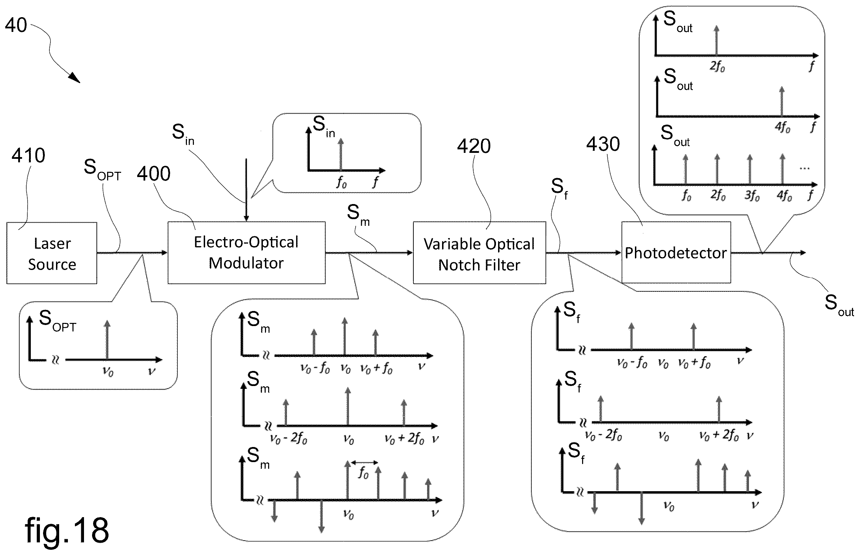

Figure 18 shows a block diagram of a frequency multiplier circuit 40 based on an optical band-rejection filter according to the invention. The circuit diagram in Figure 18 is similar to that described with reference to Figure 15, and the same components are shown with identical or corresponding references. A radio frequency signal Sᵢₙ is applied to a control input of an electro-optical modulator 400, which receives at an optical input an optical signal S_{OPT} from a laser source 410. The modulated signal Sₘ, i.e., the signal present at the output of the modulator 400, is applied to a band rejection optical filter 20 of the invention, from which a filtered signal S_{f} emerges, and a photodetector 430 (e.g., a photodiode) arranged in series with the filter outputs an output signal Sₒᵤₜ.

The following describes the use of the optical band rejection filter of the invention for frequency multiplication of a local radio frequency reference oscillator or for generating a comb of multiple radio frequencies of the local oscillator.

In general, a band-rejecting optical filter at the output of a Mach-Zehnder-type amplitude modulator or phase modulator enables a frequency multiplication of the RF signal applied to the modulator itself via a non-linear mechanism of electro-optical mixing and subsequent conversion into the electrical domain of the optical signal by means of photodetection.

For instance, by applying a sinusoidal (continuous-wave) modulating tone with frequency f₀ to a Mach-Zehnder amplitude modulator 400 operating between the maximum and minimum of its transmission characteristic (or in correspondence to the maximum transmission), the output signal will exhibit a double sideband with carrier spectrum in which the sidebands are spaced in frequency from the carrier by an amount equal to the frequency of the modulating tone or its double value, respectively.

The suppression of the carrier by the band rejection filter 420 to suppress the carrier at frequency v₀, results in the two cases in the generation, downstream the photodetector 430, of a frequency component twice as high as the original modulating signal. Note that such components would also be generated in the case of photodetection of the original signal, but the presence of the optical carrier typically 'saturates' the total power available at the output of the photodetector, reducing the amplitude of the second harmonic signal and, furthermore, a subsequent RF filtering stage may be required to separate it from the typically stronger fundamental frequency component, whereas in the case of using an optical band rejection filter to suppress the optical carrier at frequency v₀, this component is not present downstream the photodetector.

Another case of interest is the use of an electro-optical phase modulator driven by an RF modulating tone (f₀) with sufficient power (i.e., in the over-modulation regime) to generate a comb of optical components at integer multiples of the modulating frequency (and whose number depends on the amplitude of the modulating signal), with an appropriate phase relationship as illustrated in the insets of the figure. For such a signal, the electrical spectrum at the output of a photodetector presents only the zero-frequency component, since the beats between the various components of the optical spectrum of the phase signal interfere destructively after the photodetector. The use of a band-rejecting optical filter to suppress the optical carrier at frequency v₀ instead allows a comb of multiple radio frequencies of the modulating tone to be generated at the output of the photodetector.

The generation of a radio frequency comb finds application, for example, in radio systems whose operating frequency needs to be changed over a wide range (by means of appropriate frequency variation of the modulating signal and/or selection of the integrating harmonic) or in radio systems operating simultaneously on several bands. Also in this case, the use of a band-rejecting optical filter with a high extinction ratio, large free-spectral-range, and the possibility of tuning and shaping its response, allows for improved system performance in terms of generated signal quality, stability, and reconfigurability over a wide frequency range.

### • Performance enhancement in radio-over-fiber links

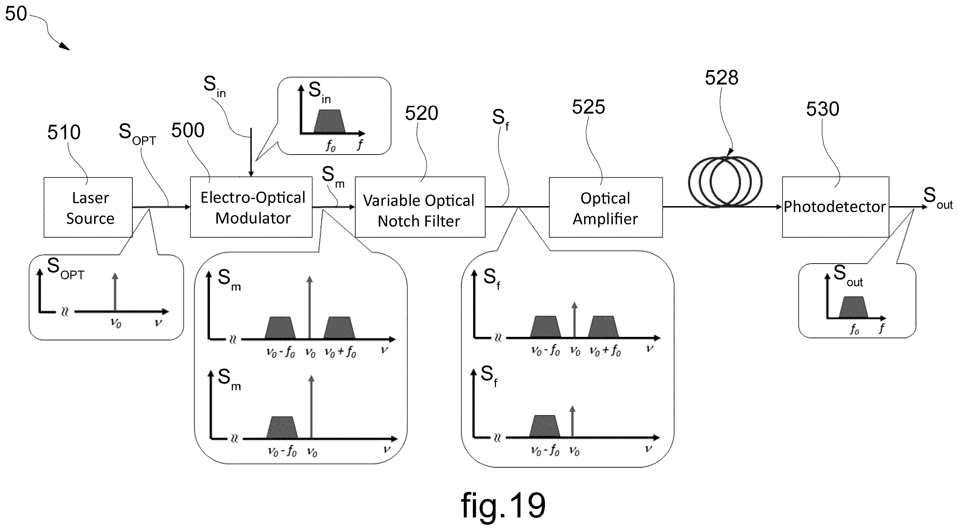

A block diagram of a radio-over-fiber transmission circuit 50 based on an optical band-rejection filter according to the invention is shown in Figure 19.

A radio-over-fiber transmission system consists of the frequency translation of a radio signal to optical frequencies using an electro-optical modulator, the subsequent transmission over a fiber-optic (or waveguide) channel, and the recovery of the original radio signal by means of a translation in the opposite direction from optical to microwave frequencies in a photodetector at the end of the link. Either double or single sideband modulation mechanisms can be used. The optical spectrum at the output of the electro-optical modulator typically contains a strong component at the continuous-wave carrier frequency (i.e. the optical carrier) that contains no useful information, and which is typically much higher than the modulated sidebands (or the sideband in the case of single sideband modulation). Since the input power to a photodetector is limited by its damage threshold and/or by the occurrence of undesirable nonlinear phenomena, the presence of a strong continuous-wave component at the input of a photodiode contributes to limiting the maximum obtainable power for the radio signal at the output of the link, and consequently to worsening the fundamental parameters of the transmission system such as: radio-frequency gain, noise figure, and ratio of useful signal power to interfering signals (spurious-free-dynamic-range).

Assuming that a constant average power level can be maintained at the input of the photodetector (e.g., by means of a common optical fiber or semiconductor amplifier, where the latter can be conveniently integrated on a photonic circuit), a commonly used method to improve the mentioned parameters is to suitably reduce the power level of the optical carrier, the optimal suppression level of the optical carrier depending on the amplitude of the radio frequency signal applied to the electro-optical modulator.

An optical band rejection filter according to the present invention can be used to improve the performance of a radio-over-fiber transmission system by partial suppression of the optical carrier in the signal at the output of the electro-optical modulator.

The circuit diagram in Figure 19 is similar to that described with reference to Figure 15, and the same components are shown with identical or corresponding references. A radio frequency signal Sᵢₙ is applied to a control input of an electro-optical modulator 500, which receives at an optical input an optical carrier signal S_{OPT} from a laser source 510. The modulated signal Sₘ, i.e., the signal present at the output of the modulator 500, is applied to an optical band rejection filter 520 of the invention, from which emerges a filtered signal S_{f}, which is subjected to amplification at an optical amplifier device 525. The amplified signal Sₐ is transmitted in an optical fiber link 528 to a photodetector 530 (e.g. a photodiode) which outputs an output signal Sₒᵤₜ.

It is known that the level of carrier suppression that provides the maximum improvement in link gain, noise figure and spurious-free dynamic range parameters depends on the amplitude of the radio signal input to the electro-optic modulator, so the use of a filter with controllable rejection ratio allows the optimization of the system for different operating conditions. **In** particular, the narrow-band optical filter 520 with variable rejection ratio offers advantages such as independence from the radio signal frequency and its intensity at the input of the electro-optic modulator. The use of the optical amplifier makes it possible to keep the total average optical power level constant and close to the maximum value allowed at the input of the photoreceiver. The possibility of building such a filtering mechanism in a waveguide is useful in transceivers for radio-over-fiber or sensing radio systems based on extremely small, low weight and low energy consumption photonic integrated circuits.

### • Sensing

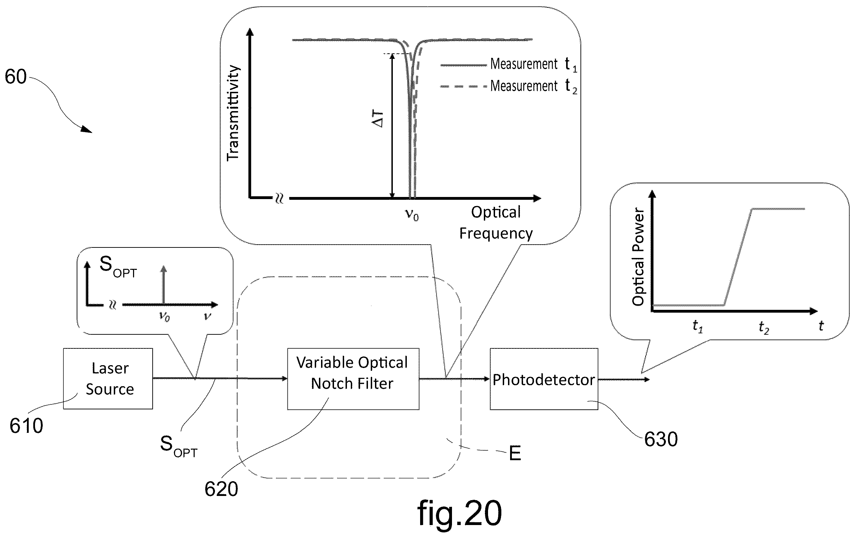

A block diagram of a sensor circuit 60 based on an optical band rejection filter according to the invention is shown in Figure 20.

The sensor circuit includes a monochromatic laser source 610 capable of emitting an optical signal S_{OPT} toward an optical band rejection filter 620 according to the invention arranged in a sensing environment E, the response of which is optimized to provide maximum attenuation. The filter is configured to output a filtered signal S_{f}, which is sent to the input of a photodetector 630 (e.g. a photodiode) which outputs a signal Sₒᵤₜ. The wavelength of the source and the wavelength of maximum filter attenuation are initially coincident (by appropriate tuning of one of the two devices), as shown in the figure for measurement at time t₁. A subsequent photodetection stage then provides a power reading close to zero. Any variation in the context with which the filter interacts (e.g. ambient temperature, or the presence or change in the concentration of a given substance in a liquid or gaseous environment interacting with the filter) causes a change in the resonance frequencies of one or both of the resonators' integrated optical cavities (in the case of a liquid environment, special "hollow" guides called slot waveguides may be used to maximize interaction with the sample being processed), and this results in a deviation of the maximum attenuation frequency (and/or a decrease in the maximum attenuation value itself). As a result of the low bandwidth and high extinction ratio of the filter, minimal frequency deviations observed in the measurement at time t₂ produce a noticeable change in the transmissivity of the filter ΔT, resulting in an increase in the measured optical power at the photodetector 630, thus providing a "readout" of the variation in the parameter under investigation. Using a laser source 610 configured to scan the optical spectrum around the resonance frequency of the resonators of optical filter 620, it is possible to "read" the above variations. The various optical phase shifters (or some of them) in the filter 620 can be configured to tune the operating point of the device so as to provide an "optimal" filter condition, i.e. sufficiently narrow attenuation band and high rejection ratio to provide good sensing resolution and sensitivity values.

It should be noted that the proposed embodiment of the present invention in the foregoing discussion is purely illustrative and not limiting of the present invention. A skilled person in the art could easily implement the present invention in different embodiments that do not, however, deviate from the principles disclosed herein, and are therefore covered by the present patent.

This applies in particular with regard to the possibility of making the mirrors of the R' and R" resonators in Fabry-Perot cavities by means of ring waveguides, rather than by means of distributed mirrors. This typically leads to an increase in the overall length of the cavity, resulting in more resonances (or, equivalently, a reduction in the free-spectral range). It may, however, be advantageous in applications where a high instantaneous bandwidth is not required (i.e. relatively small free-spectral-range values can be tolerated) since the ring mirror losses may be lower than the distributed mirror ones.

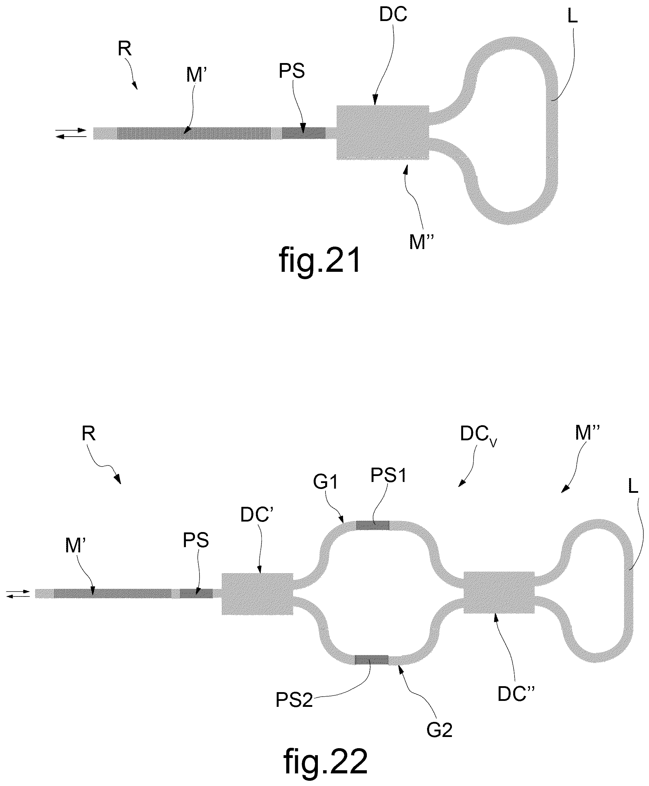

Some embodiments are shown in Figures 21, 22 and 23 in which elements or components that are identical or functionally equivalent to those illustrated in Figure 1 have been indicated with the same references as those already used in the description of that previous figure.

Figure 21 shows a waveguide Fabry-Perot type optical cavity forming an optical resistor R, a component of the band rejection filter of the invention, built using a partially reflective waveguide distributed input mirror M' (reflectivity less than 100%) and a waveguide output mirror M" with reflectivity close to 100%. The high-reflectivity output mirror is made by a three-port DC directional optical coupler (i.e. with only one input port, which is connected to the cavity) with a fixed beam separation/coupling ratio of 50%, where the two output ports, on the opposite side to the cavity, are connected through a waveguide ring L. With no optical losses in the directional coupler and the waveguide, and with an ideal separation/coupling ratio of 50%, the reflectivity of the device is exactly 100%.

Figure 22 shows a possible variation of the configuration of Figure 21 in which the fixed ratio directional optical coupler DC is replaced by a directional coupler with variable separation/coupling ratio DC_{V} to allow the reflectivity coefficient of the output mirror to be tuned to optimize the filter response for a given application. The directional optical coupler DC_{V} with variable beam coupling/separation ratio is built as in figure 5, i.e. it includes a pair of fixed-ratio directional couplers DC' and DC" connected via two waveguides of identical length G1 and G2 and whose relative phase shift can be controlled via a respective electro-optical or thermo-optical phase shifter device PS1, PS2.

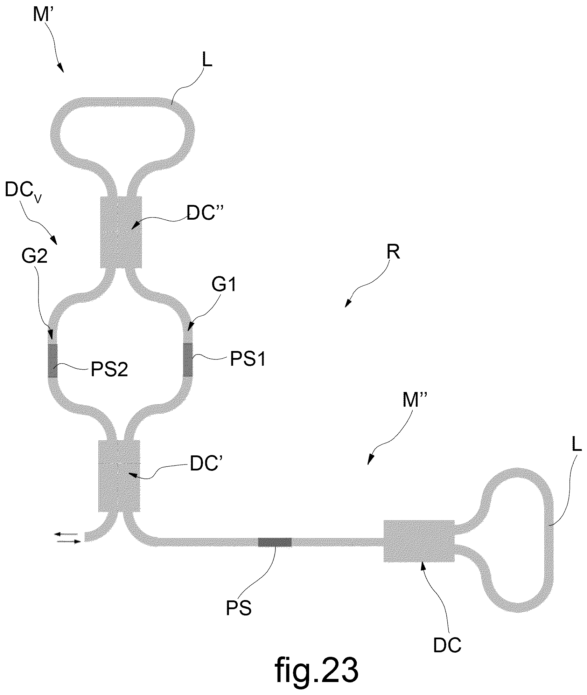

Figure 23 shows a further variation of the configuration of figure 21 in which the integrated Fabry-Perot type cavity is entirely built by means of ring-guide mirrors, in which the input mirror M' is made partially reflective through the use of a variable ratio directional coupler DC_{V}, while the output mirror M" is 100% reflective. In an alternative configuration, the reflectivity of the output mirror M" can also be varied using a variable ratio directional coupler.

Clearly, without affecting the principle of the invention, the embodiments and details of fabrication may be widely varied with respect to what has been described and illustrated by way of non-limiting example only, without departing from the scope of the invention as defined by the appended claims.

## Claims

1. Waveguide optical filter arrangement for band rejection around a predetermined rejection frequency, including:
- an optical beam coupling/separation arrangement comprising:
a first port adapted to receive an optical signal input to the filter;
a second port adapted to output a filtered optical signal;
a third port directly connected to the first port and optically coupled to a first Fabry-Pérot cavity formed in an optical waveguide, resonating at a controlled first wavelength; and
a fourth port directly connected to the first port and optically coupled to a second Fabry-Pérot cavity formed in an optical waveguide, resonating at a second controlled wavelength,
said optical beam coupling/separation arrangement being configured to separate said optical signal incoming to the filter into a first component routed to said third port and a second component routed to said fourth port,
in which said first Fabry-Pérot cavity comprises:
a first partially reflecting input mirror;
a second mirror opposite the first mirror and at least partially reflective; and
a first controlled optical phase shifter placed between the first and second mirrors, configured to tune the resonance frequency of said first Fabry-Pérot cavity,
said first Fabry-Perot cavity being adapted to receive said first component of the optical signal at the input of the filter and to provide at the third port of said optical beam coupling/separating arrangement a first reflected component of the optical signal at the input of the filter exhibiting an attenuation at the resonance frequency of said first Fabry-Pérot cavity and a phase variation around the resonance frequency comprising a maximum phase advance at a first frequency below the resonance frequency and a maximum phase delay at a second frequency above the resonance frequency,
in which said second Fabry-Pérot cavity comprises:
a first partially reflecting input mirror;
a second mirror opposite the first mirror and at least partially reflective; and
a second controlled optical phase shifter placed between the first and second mirror, configured to tune the resonance frequency of said second Fabry- Pérot cavity,
said second Fabry-Perot cavity being adapted to receive said second component of the optical signal input to the filter and to provide at the fourth port of said beam coupling/separating arrangement a second reflected component of the optical signal input to the filter exhibiting an attenuation at the resonance frequency of said second Fabry-Perot cavity and a phase variation around the resonance frequency between a maximum phase advance at a first frequency below the resonance frequency and a maximum phase delay at a second frequency above the resonance frequency; and
- at least one external optical phase shifter, arranged between said optical beam coupling/separating arrangement and at least one of the first Fabry-Pérot cavity and the second Fabry-Pérot cavity, configured to adjust the relative phase shift between the first and second reflected component of the optical signal emitted by the first and second Fabry-Pérot cavities;
wherein said first and second optical phase shifters of said first and second Fabry-Pérot cavities are adapted to be controlled to determine a frequency separation between the resonance frequency of said first Fabry-Pérot cavity and the resonance frequency of said second Fabry-Pérot cavity such that the first frequency at which maximum phase advance of said first reflected component of said optical signal occurs coincides with the second frequency at which maximum phase delay of said second reflected component of said optical signal occurs (or vice versa, the first frequency at which the maximum phase advance of the second reflected component of the optical signal occurs coincides with the second frequency at which the maximum phase delay of the first reflected component of the optical signal occurs), so as to obtain a maximum relative phase shift between the first reflected component of the optical signal and the second reflected component of the optical signal at a frequency intermediate between the resonance frequency of the first Fabry-Pérot cavity and the resonance frequency of the second Fabry-Pérot cavity, corresponding to said predetermined rejection frequency of the optical filter arrangement, and
wherein said optical beam coupling/separation arrangement is configured to combine and route to the second port said first reflected component of the optical signal input to the filter, emerging from said first Fabry-Pérot cavity, and said second reflected component of the optical signal input to the filter, emerging from said second Fabry-Pérot cavity, which are in a condition of destructive interference at said predetermined rejection frequency of the optical filter arrangement.

2. Optical filter arrangement according to claim 1, wherein the second Fabry-Pérot cavity is nominally identical to the first Fabry-Pérot cavity.

3. Optical filter arrangement according to any one of claims 1 or 2, wherein said optical beam coupling/separation arrangement has a coupling/separation ratio of 50%.

4. Optical filter arrangement according to any one of claims 1 or 2, wherein said optical beam coupling/separation arrangement comprises a first fixed ratio directional coupler and a second fixed ratio directional coupler arranged in cascade with the interposition of at least one optical phase shifter.

5. Optical filter arrangement according to any one of the preceding claims, wherein at least one of the first partially reflecting input mirror and the second mirror opposite the first mirror, at least partially reflective, of the first and/or second Fabry-Pérot cavity comprises a distributed Bragg reflector mirror.

6. Optical filter arrangement according to any one of the preceding claims, wherein the second mirror opposite the first mirror of the first and/or second Fabry-Pérot cavity is built with an directional optical coupler comprising an input port and two output ports connected together with a waveguide ring, wherein the directional optical coupler has a beam separation/coupling ratio of 50% to form a mirror with total reflectivity or a variable beam separation/coupling ratio to form a mirror with partial reflectivity.

7. Optical filter arrangement according to any of the above claims, wherein the first partially reflecting input mirror of the first and/or second Fabry-Pérot cavity is built with a directional optical coupler comprising an input port and two output ports interconnected with a waveguide ring, in which the directional optical coupler has a variable beam separation/coupling ratio.

8. Optical filter arrangement according to claim 6 or 7, wherein said directional optical coupler having a variable beam separation/coupling ratio comprises a first directional coupler and a second directional coupler having a fixed beam separation/coupling ratio arranged in cascade with the interposition of at least one optical phase shifter.

9. Optical filter arrangement according to any one of the preceding claims, wherein said optical phase shifter is an electro-optical or thermo-optical device.

10. Optical filter arrangement according to any one of the preceding claims, wherein the optical waveguide is a silicon or silicon nitride or lithium niobate waveguide fabricated on a silicon oxide substrate, or a waveguide made of semiconductor compound of III-V groups.

11. Filter circuit for an RF signal, including:
- an optical source configured to emit a continuous wave optical signal;
- an electro-optical modulator coupled to the optical source and having a control input adapted to receive said radio-frequency signal, the electro-optical modulator being adapted to modulate the optical signal in response to said radio-frequency signal applied to the control input and generate a modulated optical signal;
- a band-rejecting optical filter arrangement according to any one of claims 1 to 10, operatively coupled to said electro-optic modulator for receiving said modulated optical signal, and adapted to provide a filtered optical signal in which at least one component or spectral portion of said modulated optical signal is suppressed; and
- a photodetector device, operatively coupled to the band-rejecting optical filter arrangement and configured to convert said filtered optical signal into an electrical radio frequency signal.

12. Radio frequency signal generator circuit, including:
- an optical source configured to emit a continuous wave optical carrier signal;
- an electro-optical modulator coupled to the optical source and having a control input adapted to receive a radio frequency signal, the electro-optical modulator being adapted to modulate the optical carrier signal in response to said radio frequency signal applied to the control input and generate a modulated optical signal;
- a band rejection optical filter arrangement according to any one of the claims 1 to 10, operatively coupled to said electro-optical modulator to receive said modulated optical signal, and adapted to provide a filtered optical signal;
- a photodetector device, operatively coupled to the band-rejecting optical filter arrangement and configured to convert said filtered optical signal into an electrical radio frequency signal;
and
- a feedback circuit configured to direct at least a portion of the radio-frequency electrical signal to the control input of the electro-optical modulator, thereby establishing a sustained oscillation at a predetermined radio frequency.

13. Modulation circuit for an optical signal, including:
- an optical source configured to emit a continuous wave optical carrier signal having a predetermined frequency;
- an electro-optical modulator coupled to the optical source and having a control input adapted to receive a radio frequency modulating signal including a tone at a pre-determined modulation frequency or a broadband signal centered around a pre-determined modulation frequency, the electro-optical modulator being adapted to modulate the optical carrier signal in response to said radio frequency modulating signal applied to the control input and generate a modulated optical signal; and
- a band-rejecting optical filter arrangement according to any one of claims 1 to 10, operatively coupled to said electro-optical modulator for receiving said modulated optical signal, and adapted to provide a filtered optical signal in which the predetermined frequency of the optical carrier signal or a sideband of the modulated optical signal is suppressed, at a frequency that is a combination of the predetermined frequency of the optical carrier signal and the predetermined modulation frequency.

14. Frequency-multiplying circuit of a reference radio frequency tone or radiofrequency comb generator at multiple values of a reference radio frequency tone, including:
- an optical source configured to emit a continuous wave optical carrier signal having a predetermined frequency;
- an electro-optical modulator coupled to the optical source and having a control input adapted to receive said reference radio-frequency tone, the electro-optical modulator being adapted to modulate the optical carrier signal in response to said reference radio-frequency tone applied to the control input and generate a modulated optical signal including frequency components corresponding to the reference tone and harmonics of the reference tone;
- a band rejection optical filter arrangement according to any one of the claims 1 to 10, operatively coupled to said electro-optical modulator to receive said modulated optical signal, and adapted to provide a filtered optical signal in which the predetermined frequency of the optical carrier signal is suppressed;
- a photodetector device, operatively coupled to the band rejection optical filter arrangement and configured to convert said filtered optical signal into an electrical radio frequency signal, whereby said electrical radio frequency signal comprises at least one harmonic component of the reference radio frequency tone.

15. Transmission circuit for a radio frequency signal over fibre, including:
- an optical source configured to emit a continuous wave optical carrier signal having a predetermined frequency;
- an electro-optical modulator coupled to the optical source and having a control input adapted to receive said radio-frequency signal, the electro-optical modulator being adapted to modulate the optical signal in response to said radio-frequency signal applied to the control input and generate a modulated optical signal;
- a band-rej ecting optical filter arrangement according to any one of the claims 1 to 10, operatively coupled to said electro-optical modulator to receive said modulated optical signal, and adapted to provide a filtered optical signal in which the predetermined frequency of the optical carrier signal is partially suppressed;
- an amplifier device to amplify said filtered optical signal;
- a fiber optic link for transmission of the amplified filtered optical signal; and a photodetector device, operatively coupled to the fiber-optic link and configured to convert the optical signal transmitted by the fiber-optic link into a radio-frequency electrical signal.

16. Sensor circuit of a physical parameter of a sensing environment, including:
- an optical source configured to emit a continuous wave optical signal at a predetermined wavelength;
- a band-rejecting optical filter arrangement according to any one of claims 1 to 10, arranged in a sensing environment and operatively coupled to said optical source, the optical filter arrangement being configured to nominally exhibit an optical signal rejection response at said predetermined wavelength, the rejection response being sensitive to said physical parameter of the sensing environment wherein a change in said parameter produces a shift in the rejection frequency of the optical filter arrangement or a decrease in the attenuation value of the optical signal; and
- a photodetector device, operatively coupled to the band rejection optical filter arrangement and configured to convert said filtered optical signal into an electrical signal indicative of a change in said detection environment parameter.
